# EUROPÄISCHE PATENTSCHRIFT

(11) **EP 4 007 700 B1**
(45) Veröffentlichungstag und Bekanntmachung des Hinweises auf die Patenterteilung: **02.07.2025**
(21) Anmeldenummer: 20751100.7
(22) Anmeldetag: 29.07.2020
(51) Int. Cl.: B32B 37/00, B32B 17/00, B32B 17/10, B32B 37/12, B32B 38/18, B29C 65/16, B29C 65/14, B29C 65/48, B29C 65/52, B29C 65/78, B29C 65/00

(54) **VERFAHREN ZUR HERSTELLUNG EINER KLEBEVERBINDUNG UND TRÄGERPLATTE FÜR DIE HERSTELLUNG EINER KLEBEVERBINDUNG**
METHOD FOR PRODUCING AN ADHESIVE BOND AND SUPPORT PLATE FOR PRODUCING AN ADHESIVE BOND
PROCÉDÉ DE PRODUCTION D'UN JOINT COLLÉ ET PLAQUE DE SUPPORT POUR PRODUIRE UN JOINT COLLÉ

(30) Priorität: 02.08.2019 DE 102019120954
(43) Veröffentlichungstag der Anmeldung: 08.06.2022
(73) Patentinhaber: ASMPT AMICRA GmbH, 93055 Regensburg (DE)
(72) Erfinder: KAISER, Rudolf, 93138 Lappersdorf (DE); LAPSIEN, Horst, 93049 Regensburg (DE)
(74) Vertreter: Glück Kritzenberger Patentanwälte PartGmbB
(86) Internationale Anmeldenummer: PCT/EP2020/071364
(87) Internationale Veröffentlichungsnummer: WO 2021/023592

(56) Entgegenhaltungen:
- JP-A- 2004 086 010
- US-A- 5 433 810
- US-A1- 2014 178 619

## Beschreibung

### Technisches Gebiet

Die Erfindung bezieht sich auf ein Verfahren zur Herstellung einer Klebeverbindung zwischen zumindest einem ersten und zweiten, zumindest teilweise transparenten plattenförmigen Bauteil, bei dem das erste Bauteil auf eine Trägerplatte gelegt wird, bei dem auf der der Trägerplatte abgewandten Seite des ersten Bauteils an vorgegebenen Stellen Klebstoff auf das erste Bauteil aufgetragen wird, bei dem ein zweites Bauteil auf das erste Bauteil gelegt wird und parallel zum ersten Bauteil in einem vorbestimmten Abstand gehalten wird, und zwar derart, dass das zweite Bauteil in Kontakt mit dem auf dem ersten Bauteil befindlichen Klebstoff gelangt, und bei dem der Klebstoff ausgehärtet wird. Des Weiteren bezieht sich die Erfindung auf eine Trägerplatte für die Herstellung einer Klebeverbindung zwischen zumindest einem ersten und zweiten, zumindest teilweise transparenten plattenförmigen Bauteil nach dem Verfahren nach der vorangegangenen Beschreibung.

### Stand der Technik

Verfahren zur Herstellung einer Klebeverbindung zwischen zwei plattenförmigen Bauteilen sind aus dem Stand der Technik bestens bekannt. Ein Verfahren, das eine besonders hohe Genauigkeit bei der Positionierung der Bauteile ermöglicht, wird beispielsweise in der Druckschrift WO 2004/112100 A1 beschrieben, wo die Bondvorrichtung eine Erfassungsstation umfasst, mit der wenigstens zwei Seiten eines Bauteils hinsichtlich deren Lage und/oder Abmessungen erfasst werden. Dazu enthält die Erfassungsstation vorzugsweise wenigstens zwei Kamerasysteme zum Erfassen je einer Seite des Bauteils. Wenn die Bauteile exakt positioniert sind, werden sie vorzugsweise durch Laserlöten miteinander verbunden.

Ferner ist aus der JP 2012-152677 A eine Vorrichtung sowie ein zugehöriges Verfahren zum Aufbringen eines mittels ultravioletter Strahlung aushärtbaren Klebstoffes auf einem Werkstück. Der Klebstoff wird entlang einer Linie mit geringer Linienbreite auf das Werkstück aufgebracht und anschließend durch Beaufschlagung mit UV-Licht zumindest randseitig ausgehärtet.

Die DE 10 2006 001 885 A1 betrifft die Verwendung eines Schmelzklebstoffes zur Fixierung mindestens eines Mikrobauteils auf einem Träger zum Bau eines Detektormoduls mit einem Herstellungsverfahren zur Fixierung mindestens eines Mikrobauteils auf einem Träger.

Hierzu wird der Schmelzklebstoff auf einen Träger aufgebracht, dort das Mikrobauteils in einem vorbestimmten Abstand vom Träger positioniert und über den Schmelzklebstoff fixiert, und zwar wird eine feste Klebeverbindung zwischen dem mindestens einen Mikrobauteil und dem Träger durch Abkühlung des Heißklebers hergestellt.

Aus der US5433810A1 ist eine Trägerplatte zur Herstellung einer Klebeverbindung zwischen einer ersten und zweiten Linse bekannt, die einen für UV-Licht transparenten und intransparenten Bereich aufweist. JP2004086010A offenbart ein Verfahren und eine Vorrichtung zur Herstellung einer Klebeverbindung zwischen mindestens einer ersten und einer zweiten transparenten Komponente.

Für das Verbinden von zwei Bauteilen, die parallel zueinander und in einem vorbestimmten Abstand voneinander verbunden werden sollen, sind die bekannten Verfahren allerdings wenig geeignet. In diesem Fall muss beispielsweise darauf geachtet werden, dass nur sehr geringe oder bestenfalls keine Spannungen in die Bauteile eingebracht werden, damit diese ihre ebene Struktur behalten. Die beim Laserlöten auftretenden hohen Temperaturen machen das zuvor genannte Verfahren dafür ungeeignet.

### Darstellung der Erfindung

Aufgabe der vorliegenden Erfindung ist es, ein Verfahren zur Herstellung einer Klebeverbindung zwischen zwei plattenförmigen Bauteilen bereitzustellen, dass eine hohe Genauigkeit bei der Positionierung der Bauteile ermöglicht, während beim Kleben kaum oder keine Spannungen in die Bauteile eingebracht werden. Des Weiteren ist es die Aufgabe der vorliegenden Erfindung, eine Trägerplatte bereitzustellen, mit der ein derartiges Verfahren durchgeführt werden kann.

Diese Aufgabe wird gelöst durch ein Verfahren zur Herstellung einer Klebeverbindung gemäß Patentanspruch 1 und eine Trägerplatte für die Herstellung einer Klebeverbindung gemäß Patentanspruch 10.

Vorgeschlagen wird ein Verfahren zur Herstellung einer Klebeverbindung zwischen zumindest einem ersten und zweiten, zumindest teilweise transparenten plattenförmigen Bauteil. Bei den teilweise transparenten plattenförmigen Bauteilen kann es sich beispielsweise um Glasplatten handeln. Werden diese parallel zueinander und in einem vorbestimmten Abstand voneinander miteinander verklebt, dann können sie beispielsweise in Holografie-Brillen zum Einsatz kommen.

Bei dem Verfahren wird zunächst das erste Bauteil auf eine Trägerplatte gelegt. Sodann wird auf der der Trägerplatte abgewandten Seite des ersten Bauteils an vorgegebenen Stellen Klebstoff auf das erste Bauteil aufgetragen. Wird also das erste Bauteil oben auf die Trägerplatte gelegt, dann wird der Klebstoff oben auf das erste Bauteil aufgetragen. In einem nächsten Schritt wird das zweite Bauteil auf das erste Bauteil gelegt wird und parallel zum ersten Bauteil in einem vorbestimmten Abstand gehalten. Die genaue Positionierung des ersten Bauteils in Bezug auf das zweite Bauteil wird dabei von der geplanten Anwendung der miteinander verklebten Bauteile bestimmt. Für den Fall, dass beide Bauteile die gleiche Größe haben, ist es häufig vorgegeben, dass das zweite Bauteil exakt über dem ersten Bauteil positioniert wird. Auch der genaue Abstand der beiden Bauteile zueinander wird von der geplanten Anwendung bestimmt. Um eine Klebeverbindung zwischen dem ersten Bauteil und dem zweiten Bauteil herstellen zu können, muss das zweite Bauteil, wenn es parallel zum ersten Bauteil im vorbestimmten Abstand zu diesem gehalten wird, in Kontakt mit dem auf dem ersten Bauteil befindlichen Klebstoff gelangen. Hierzu ist es erforderlich, dass der Klebstoffauftrag auf das erste Bauteil hinreichend groß war.

Zum Aushärten des Klebstoffs wird dieser von der den Bauteilen abgewandten Seite der Trägerplatte durch die zumindest teilweise transparente Trägerplatte und durch das erste Bauteil mit Licht beaufschlagt. Das heißt, wenn das erste Bauteil oben auf der Trägerplatte liegt und das zweite Bauteil über dem ersten Bauteil gehalten wird, erfolgt die Beaufschlagung mit Licht von unten. Die zum Aushärten des Klebstoffs benötigte Intensität und Dauer der Lichtbeaufschlagung ist dabei von vielen Faktoren abhängig, unter anderem von der Art und Dicke des Klebstoffs, von der Temperatur und vom Spektrum des Lichts.

Dadurch, dass die Beaufschlagung mit Licht von der den Bauteilen abgewandten Seite der Trägerplatte erfolgt, können die Bauteile von der den Bauteilen zugewandten Seite der Trägerplatte in der vorgegebenen Position und im vorbestimmten Abstand zueinander gehalten werden, ohne von den Einrichtungen zur Lichterzeugung beeinträchtigt zu werden. Des Weiteren ermöglicht die Beaufschlagung mit Licht ein Aushärten des Klebstoffs ohne dass Spannungen in die Bauteile eingebracht werden.

Vorzugsweise wird die Trägerplatte in einem Plattenhalterahmen gehalten. So kann eine genaue Positionierung der Trägerplatte erreicht werden. Im Gegensatz zu einer fest installierten Trägerplatte können hierdurch auch Trägerplatten ausgetauscht werden, beispielsweise wenn eine Klebeverbindung zwischen anderen Bauteilen hergestellt werden soll, wobei verschiedene zu verklebende Bauteile üblicherweise verschiedene Trägerplatten benötigen.

Erfindungsgemäß wird das erste Bauteil auf erhabene Strukturen der Trägerplatte gelegt. Wenn die erhabenen Strukturen klein im Vergleich zum Bauteil sind werden mindestens drei erhabene Strukturen benötigt, um einen stabilen Halt des ersten Bauteils auf der Trägerplatte zu gewährleisten. Durch das Legen des ersten Bauteils auf die erhabenen Strukturen der Trägerplatte anstatt auf eine ebene Fläche ist es einfacher, eine ebene Ausrichtung zu erhalten, da zwischen zwei ebenen Flächen schon kleinste Verunreinigungen ausreichen um eine Neigung des ersten Bauteils gegenüber der ebenen Ausrichtung zu bewirken. Des Weiteren lässt sich ein auf erhabene Strukturen der Trägerplatte gelegtes Bauteil nach erfolgter Herstellung der Klebeverbindung auch wieder leichter von der Trägerplatte abheben, da bessere Angriffspunkte bestehen und eine Adhäsion des ersten Bauteils auf der Trägerplatte zumindest größtenteils vermieden wird.

Vorteilhafterweise wird der Klebstoff mittels eines Dosierventils auf das erste Bauteil aufgebracht. So lässt sich die Menge des auf das erste Bauteil aufgebrachten Klebstoffs genau steuern. Zu wenig Klebstoff würde möglicherweise bedeuten, dass das zweite Bauteil, wenn es im vorbestimmten Abstand zum ersten Bauteil gehalten wird, gar nicht in Kontakt mit dem Klebstoff kommt, zudem würde die Klebeverbindung möglicherweise zu schwach werden. Zu viel Klebstoff hingegen bräuchte eine längere Zeit zum Aushärten und würde die Stellen der Bauteile, die mit Klebstoff in Kontakt sind, vergrößern. Das Dosierventil ist dabei vorzugsweise so verfahrbar, dass Klebstoff an beliebigen Stellen auf der der Trägerplatte abgewandten Seite des ersten Bauteils aufgetragen werden kann.

Von Vorteil ist es, wenn sich die vorgegebenen Stellen, an denen der Klebstoff auf das erste Bauteil aufgetragen wird, in einem Randbereich des ersten Bauteils befinden. Die Stellen, an denen Klebstoff aufgetragen wurde, lassen sich häufig nicht zu dem Zweck, den die verbundenen Bauteile erfüllen sollen, nutzen. Durch einen Klebstoffauftrag im Randbereich des ersten Bauteils ergibt sich ein großer zentraler Bereich des ersten Bauteils, auf dem kein Klebstoff aufgetragen wurde und der für den gewünschten Zweck genutzt werden kann.

Vorteilhaft ist es auch, wenn der Klebstoff im Bereich der erhabenen Strukturen der Trägerplatte auf das erste Bauteil aufgetragen wird. Die erhabenen Strukturen der Trägerplatte sind dann selbstverständlich dort angeordnet, wo der Klebstoffauftrag erfolgen soll. Somit sind die Bereiche, in den kein Klebstoffauftrag erfolgt, auch frei von Haltekräften durch die erhabenen Strukturen der Trägerplatte und damit auch frei von durch diese Haltekräfte verursachten lokalen Spannungen.

Vorteilhafterweise wird zumindest das zweite Bauteil von einer Handlingseinheit in einem Bauteilhalterahmen gehalten. So kann das zweite Bauteil von der Handlingseinheit an der vorgegebenen Position und im vorbestimmten Abstand zum ersten Bauteil positioniert und bis zum Aushärten des Klebstoffs gehalten werden.

Von Vorteil ist es, wenn nach dem Auflegen des ersten Bauteils auf die Trägerplatte die Position des ersten Bauteils mittels einer Kameraeinrichtung vermessen wird. Die Kameraeinrichtung weist dabei zumindest eine Kamera auf, kann aber auch mehrere Kameras aufweisen, um eine noch höhere Genauigkeit zu erzielen. Die von den Kameras aufgenommenen Fotos werden zum genauen Vermessen der Position des ersten Bauteils vorzugsweise mit einer Bildverarbeitungssoftware ausgewertet. Vor dem in Kontakt mit dem Klebstoff Bringen des zweiten Bauteils wird die Position des zweiten Bauteils mittels der Kameraeinrichtung vermessen. Dabei kann es sich bei den von der Kameraeinrichtung verwendeten Kameras um die gleichen oder um andere wie bei der Vermessung des ersten Bauteils handeln. Auch die vom zweiten Bauteil aufgenommenen Fotos werden zum genauen Vermessen der Position des zweiten Bauteils mit einer Bildverarbeitungssoftware ausgewertet. Auf Grund der derart vermessenen Positionen wird das zweite Bauteil in Bezug auf das erste Bauteil derart justiert, dass die relativen Positionen den vorgegebenen relativen Positionen entsprechen.

Um eine noch genauere Positionierung des zweiten Bauteils in Bezug auf das erste Bauteil zu erreichen, kann nach dem ersten Justieren des zweiten Bauteils eine zweite Vermessung der Position des zweiten Bauteils, wiederum mittels Kameraeinrichtung und Bildverarbeitungssoftware, erfolgen. Diese neu bestimmte Position wird wiederum mit der vorgegebenen Position verglichen und etwaige noch vorhandene Abweichungen werden abermals durch Justieren des zweiten Bauteils beseitigt. Bei Bedarf können diese Schritte noch öfter wiederholt werden.

Vorteilhaft ist es auch, wenn die den Bauteilhalterahmen haltende Handlingseinheit parallel zur Trägerplatte ausgerichtet wird, wobei die Ausrichtung manuell optisch und/oder mittels Sensoren erfolgt. Durch diese Ausrichtung wird das zweite Bauteil zumindest ungefähr parallel zum ersten Bauteil ausgerichtet. Des Weiteren wird hierdurch der Handlingseinheit eine parallel zur Trägerplatte liegende Ebene vorgegeben, in der das zweite Bauteil zum Ausrichten in Bezug auf das erste Bauteil bewegt wird. Schließlich ist durch die Ebene auch eine zu dieser Ebene senkrechte Richtung vorgegeben, in der das zweite Bauteil nachdem es ausgerichtet wurde, auf das erste Bauteil zubewegt wird.

Vorteilhafterweise erfolgt das Halten des zweiten Bauteils in einem vorbestimmten Abstand zum ersten Bauteil mittels auf dem ersten Bauteil angebrachten und/oder auf das erste Bauteil gelegten Abstandshaltern. Die Abstandshalter weisen dabei eine Dicke auf, die dem vorbestimmten Abstand entspricht, der zwischen dem ersten und dem zweiten Bauteil gehalten werden soll. Wird das zweite Bauteil auf die Abstandshalter gedrückt, stellt sich der vorbestimmte Abstand zwischen dem ersten und dem zweiten Bauteil ein. Direkt auf dem ersten Bauteil angebrachte Abstandshalter müssen schon in einem vorherigen Herstellungsschritt auf dem ersten Bauteil angebracht werden und können zumeist nach Herstellung der Klebeverbindung nicht mehr entfernt werden. Dafür vereinfachen direkt auf dem ersten Bauteil angebrachte Abstandshalter die Herstellung der Klebeverbindung, da sie nicht separat gehandhabt werden müssen. Auf das erste Bauteil gelegte Abstandshalter müssen hingegen vor oder nach dem Legen des ersten Bauteils auf die Trägerplatte von einer eigenen Handlingseinheit auf das erste Bauteil gelegt werden. Wenn die Abstandshalter über den Rand des ersten Bauteils ragen, können sie aber nach Herstellung der Klebeverbindung wieder von den Bauteilen entfernt werden.

Alternativ hierzu ist es von Vorteil, wenn das Halten des zweiten Bauteils in einem vorbestimmten Abstand zum ersten Bauteil mittels Sensoren, insbesondere optischen Sensoren, erfolgt. Hierbei hält lediglich die Handlingseinheit über den Bauteilhalterahmen das zweite Bauteil. Die Sensoren sind beispielsweise auf eine oder vorzugsweise mehrere Stellen der Kanten der ersten und zweiten Bauteile gerichtet und messen, z.B. mittels einer Bildverarbeitungssoftware, den Abstand zwischen den Bauteilen. Ausgehend vom gemessenen Abstand wird die das zweite Bauteil haltende Handlingseinheit derart gesteuert, dass der vorbestimmte Abstand erreicht wird. Unterschiede zwischen den an verschiedenen Stellen der Kanten gemessenen Abständen zeigen, dass das zweite Bauteil noch nicht parallel zum ersten Bauteil gehalten wird und führen vorzugsweise zu einer Korrektur durch die Handlingseinheit.

Vorteilhaft ist es auch, wenn das den Klebstoff beaufschlagende Licht von einer UV-Lichtquelle und/oder einem Laser bereitgestellt wird. Unter UV-Licht wird dabei Licht mit Wellenlängen im Bereich von 100 nm bis 380 nm verstanden. Die genaue Wellenlänge des benötigten UV-Lichts hängt dabei vom verwendeten Klebstoff ab. Es ist auch denkbar, den Klebstoff mit Licht von zwei Lichtquellen gleichzeitig oder hintereinander zu beaufschlagen. Bei Verwendung eines Lasers zur Beaufschlagung des Klebstoffs mit Licht ist es möglich, besonders hohe Intensitäten des Lichts zu erreichen und damit verbunden eine besonders schnelle Aushärtung des Klebstoffs zu erreichen.

Vorteilhafterweise wird das Licht derart von intransparenten, d.h. lichtundurchlässigen, Abschnitten der Trägerplatte blockiert wird, dass nur die Bereiche des ersten und zweiten Bauteils mit Licht beaufschlagt werden, an denen der Klebstoff aufgetragen ist. Die intransparenten Abschnitte der Trägerplatte können dabei beispielsweise durch eine lichtundurchlässige Schicht, insbesondere eine Chromschicht, die auf einem Grundkörper der Trägerplatte aufgebracht ist, gebildet sein. Alternativ dazu kann eine mit dem Grundkörper verbundene Maske, insbesondere eine Metallmaske, die intransparenten Abschnitte der Trägerplatte darstellen. Um den Klebstoff auszuhärten müssen nur die Bereiche des ersten und zweiten Bauteils mit Licht beaufschlagt werden, an denen auch Klebstoff aufgetragen ist. Das Licht führt aber zu einer Erwärmung der Bauteile an den Stellen, an denen sie mit Licht beaufschlagt werden. Durch diese Erwärmung können Spannungen in den Bauteilen entstehen. Darüber hinaus kann das Licht, insbesondere UV-Licht, auch zu einer Schädigung der Bauteile führen. Eine Beschränkung des Lichts auf die Bereiche, an denen Klebstoff aufgetragen ist, reduziert die möglichen Spannungen und Schädigungen.

Von Vorteil ist es auch, wenn analog zum Herstellen der Klebeverbindung zwischen dem ersten Bauteil und dem zweiten Bauteil eine Klebeverbindung zwischen dem zweiten Bauteil und einem weiteren Bauteil hergestellt wird. Nachdem die Klebeverbindung zwischen dem ersten und dem zweiten Bauteil hergestellt wurde, wird also Klebstoff an vorgegebenen Stellen auf das zweite Bauteil aufgetragen. Sodann wird das weitere Bauteil auf das zweite Bauteil gelegt und parallel zum zweiten Bauteil in einem vorbestimmten Abstand gehalten. Schließlich wird der Klebstoff zum Aushärten von der den Bauteilen abgewandten Seite der Trägerplatte durch die Trägerplatte, das erste und das zweite Bauteil mit Licht beaufschlagt. Je nach vorgegebener Anzahl an zu verklebenden plattenförmigen Bauteilen kann dieser Verfahrensschritt gegebenenfalls für nochmals weitere Bauteile wiederholt werden.

Des Weiteren wird eine Trägerplatte für die Herstellung einer Klebeverbindung zwischen zumindest einem ersten und zweiten, zumindest teilweise transparenten plattenförmigen Bauteil vorgeschlagen. Bei den teilweise transparenten plattenförmigen Bauteilen kann es sich beispielsweise um Glasplatten handeln, wobei die miteinander verklebten Glasplatten zum Beispiel in Holografie-Brillen zum Einsatz kommen können.

Die Herstellung der Klebeverbindung erfolgt dabei nach dem Verfahren gemäß der vorangegangenen Beschreibung. Insbesondere wird also das erste Bauteil auf die Trägerplatte gelegt und auf der der Trägerplatte abgewandten Seite des ersten Bauteils an vorgegebenen Stellen Klebstoff auf das erste Bauteil aufgetragen. Sodann wird das zweite Bauteil auf das erste Bauteil gelegt und parallel zum ersten Bauteil in einem vorbestimmten Abstand gehalten, und zwar derart, dass das zweite Bauteil in Kontakt mit dem auf dem ersten Bauteil befindlichen Klebstoff gelangt. Schließlich wird zum Aushärten des Klebstoffs dieser von der den Bauteilen abgewandten Seite der Trägerplatte durch die Trägerplatte und durch das erste Bauteil mit Licht beaufschlagt.

Die Trägerplatte zeichnet sich dadurch aus, dass sie einen Grundkörper mit erhabenen Strukturen aufweist, auf die das erste Bauteil auflegbar ist. Falls die erhabenen Strukturen klein im Vergleich zum Bauteil sind, werden mindestens drei erhabene Strukturen benötigt, um einen stabilen Halt des ersten Bauteils auf der Trägerplatte zu gewährleisten. Durch das Legen des ersten Bauteils auf die erhabenen Strukturen der Trägerplatte anstatt auf eine ebene Fläche ist es einfacher, eine ebene Ausrichtung zu erhalten, da zwischen zwei ebenen Flächen schon kleinste Verunreinigungen ausreichen um eine Neigung des ersten Bauteils gegenüber der ebenen Ausrichtung zu bewirken. Des Weiteren lässt sich ein auf erhabene Strukturen der Trägerplatte gelegtes Bauteil nach erfolgter Herstellung der Klebeverbindung auch wieder leichter von der Trägerplatte abheben, da bessere Angriffspunkte bestehen und eine Adhäsion des ersten Bauteils auf der Trägerplatte zumindest größtenteils vermieden wird.

Ferner weist die Trägerplatte zumindest einen transparenten Abschnitt und zumindest einen intransparenten, d.h. lichtundurchlässigen, Abschnitt auf. Der transparente Abschnitt bzw. die transparenten Abschnitte befinden sich zumindest an den Stellen, an denen Klebstoff auf das erste Bauteil aufgetragen wird, so dass der Klebstoff zum Aushärten von der den Bauteilen abgewandten Seite der Trägerplatte durch die transparenten Abschnitte der Trägerplatte und durch das erste Bauteil mit Licht beaufschlagbar ist.

Die intransparenten Abschnitte der Trägerplatte schützen die in Einstrahlrichtung des Lichts dahinterliegenden Bereiche der Bauteile vor dem Licht und der damit verbundenen Wärmeentwicklung und/oder Schädigung des Materials. Vorzugsweise sind also lediglich an den vorgegebenen Stellen, an denen Klebstoff auf das erste Bauteil aufgetragen wird, transparente Abschnitte der Trägerplatte angeordnet, während die Stellen, an denen kein Klebstoff auf das erste Bauteil aufgetragen wird, mit intransparenten Abschnitten der Trägerplatte zusammenfallen.

Vorteilhafterweise sind die transparenten Abschnitte im Bereich der erhabenen Strukturen angeordnet sind. Der Klebstoffauftrag auf das erste Bauteil erfolgt dann vorzugsweise ebenfalls im Bereich der erhabenen Strukturen. Somit sind die Bereiche, in den kein Klebstoffauftrag erfolgt, auch frei von Haltekräften durch die erhabenen Strukturen der Trägerplatte und damit auch frei von durch diese Haltekräfte verursachten lokalen Spannungen.

Von Vorteil ist es, wenn die erhabenen Strukturen durch Ätzen der Stellen, die nicht erhaben sind, hergestellt sind. Hierzu werden zunächst die Stellen, die nicht geätzt werden sollen, d.h. die Stellen, die später die erhabenen Strukturen werden, durch eine Schicht, beispielsweise eine Chromschicht, geschützt. Der nicht geschützte Bereich wird sodann in einem Ätzverfahren abgetragen und anschließend wird die schützende Schicht wieder entfernt. Das Auftragen der schützenden Schicht kann dabei mit hoher Präzision erfolgen und führt damit zu sehr präzisen erhabenen Strukturen.

Vorteilhaft ist es auch, wenn die intransparenten Abschnitte durch eine auf dem Grundkörper aufgebrachte lichtundurchlässige Schicht, insbesondere eine Chromschicht, gebildet sind. Dadurch, dass die lichtundurchlässige Schicht auf den Grundkörper der Trägerplatte aufgebracht wird und somit selbst keine Stabilität besitzen muss, ist es möglich, die Dicke der lichtundurchlässigen Schicht auf die zum Blockieren des Lichts notwendige Dicke zu beschränken, wodurch der Bedarf an Rohstoffen für die Trägerplatte minimal gehalten wird.

Alternativ hierzu kann es vorteilhaft sein, wenn die intransparenten Abschnitte durch eine mit dem Grundkörper verbundene Maske, insbesondere eine Metallmaske, gebildet sind. Dabei wird die Maske zunächst in einem separaten Herstellungsprozess hergestellt, beispielsweise ebenfalls in einem Ätzverfahren oder durch Laserschneiden. Anschließend wird die Maske mit dem Grundkörper der Trägerplatte verbunden, wobei form-, kraft- und/oder stoffschlüssige Verbindungen denkbar sind. Dadurch, dass die Maske separat hergestellt wird, wird der Grundkörper der Trägerplatte, beispielsweise in Hinblick auf seine Ebenheit, während der Herstellung der Maske nicht beeinflusst. Des Weiteren lassen sich für eine separat hergestellte Maske auch Materialien, insbesondere Metalle, verwenden, die nicht oder nur erschwert direkt als Schicht auf den Grundkörper der Trägerplatte auftragbar sind.

Vorzugsweise bezieht sich die Transparenz und Intransparenz auf UV-Licht. Unter UV-Licht wird dabei Licht mit Wellenlängen im Bereich von 100 nm bis 380 nm verstanden. Die Aushärtung vieler Klebstoffe erfolgt dabei mittels UV-Licht. Die genaue Wellenlänge des benötigten UV-Lichts hängt dabei vom verwendeten Klebstoff ab, wobei die transparenten und intransparenten Abschnitte der Trägerplatte für den Spektralbereich des UV-Lichts, der verwendet wird, transparent bzw. intransparent sind.

Ferner wird eine Klebevorrichtung zur Herstellung einer Klebeverbindung zwischen zumindest einem ersten und zweiten, zumindest teilweise transparenten plattenförmigen Bauteil vorgeschlagen. Bei den teilweise transparenten plattenförmigen Bauteilen kann es sich beispielsweise um Glasplatten handeln, wobei die miteinander verklebten Glasplatten zum Beispiel in Holografie-Brillen zum Einsatz kommen können.

Die Herstellung der Klebeverbindung erfolgt dabei nach dem oben beschriebenen Verfahren. Hierzu weist die Klebevorrichtung eine sich entlang einer Arbeitsebene erstreckende Arbeitsplatte und ein diese Arbeitsplatte tragendes Untergestell auf. Die Arbeitsplatte und das Untergestell können dabei in vielfältiger Weise ausgeführt sein, sollten aber stabil und vibrationsarm sein, um eine präzises Verkleben des ersten mit dem zweiten Bauteil zu ermöglichen.

Des Weiteren weist die Klebevorrichtung eine Trägerplatte auf, die auf der Arbeitsplatte angeordnet ist oder auf der Arbeitsplatte anordenbar ist und gemäß der vorangegangenen Beschreibung ausgeführt ist. Die Trägerplatte wird dabei vorzugsweise in einem Plattenhalterahmen gehalten. Auf die Trägerplatte ist das erste Bauteil auflegbar. Dies erfolgt mittels einer Handlingseinheit, die zum Aufnehmen, Verfahren, Halten und Ablegen der Bauteile ausgebildet ist. Dazu wird das Bauteil vorzugsweise von der Handlingseinheit in einem Bauteilhalterahmen gehalten.

Ein verfahrbares Dosierventil der Klebevorrichtung ist zum Auftragen von Klebstoff auf das erste Bauteil ausgebildet. Das Verfahren des Dosierventils sollte dabei zumindest in der Arbeitsebene, vorzugsweise auch senkrecht zur Arbeitsebene möglich sein, damit ein Klebstoffauftrag an vorbestimmten Stellen des ersten Bauteils erfolgen kann. Nach erfolgtem Klebstoffauftrag wird das von der Handlingseinheit oder von einer weiteren Handlingseinheit aufgenommene zweite Bauteil auf das erste Bauteil gelegt und parallel zum ersten Bauteil in einem vorbestimmten Abstand gehalten.

Die Klebevorrichtung weist auch eine Lichtquelle zum Beaufschlagen des auf dem ersten Bauteil aufgetragenen Klebstoffs mit Licht auf. Die Klebevorrichtung zeichnet sich dabei dadurch aus, dass das Licht den Klebstoff von der den Bauteilen abgewandten Seite der Trägerplatte durch die Trägerplatte und durch das erste Bauteil erreicht. Das heißt, der Lichteintrag erfolgt von unterhalb der Trägerplatte. Durch die Beaufschlagung mit Licht härtet der Klebstoff aus und stellt eine Klebeverbindung zwischen dem ersten und dem zweiten Bauteil her, wobei das erste und das zweite Bauteil parallel zueinander und im vorbestimmten Abstand voneinander angeordnet sind.

Dadurch, dass die Beaufschlagung mit Licht von der den Bauteilen abgewandten Seite der Trägerplatte erfolgt, können die Bauteile von der den Bauteilen zugewandten Seite der Trägerplatte in der vorgegebenen Position und im vorbestimmten Abstand zueinander gehalten werden, ohne von der Lichtquelle beeinträchtigt zu werden. Des Weiteren ermöglicht die Beaufschlagung mit Licht ein Aushärten des Klebstoffs ohne dass Spannungen in die Bauteile eingebracht werden.

Vorteilhafterweise weist die Klebevorrichtung eine Kameraeinrichtung zum Vermessen der Positionen der Bauteile auf. Mittels dieser Kameraeinrichtung und vorzugsweise einer Bildverarbeitungssoftware wird zunächst die Position des ersten Bauteils und sodann die Position des zweiten Bauteils bestimmt. Auf Grund dieser Positionen wird das zweite Bauteil dann in Bezug auf das erste Bauteil derart justiert, dass die relativen Positionen den vorgegebenen relativen Positionen entsprechen.

Von Vorteil ist es auch, wenn die Klebevorrichtung Sensoren, insbesondere optische Sensoren, zum Messen des Abstands zwischen dem ersten Bauteil und dem zweiten Bauteil aufweist. Hierbei hält die Handlingseinheit über den Bauteilhalterahmen das zweite Bauteil. Die Sensoren sind beispielsweise auf eine oder vorzugsweise mehrere Stellen der Kanten der ersten und zweiten Bauteile gerichtet und messen, z.B. mittels einer Bildverarbeitungssoftware, den Abstand zwischen den Bauteilen. Ausgehend vom gemessenen Abstand wird die das zweite Bauteil haltende Handlingseinheit derart gesteuert, dass der vorbestimmte Abstand erreicht wird. Unterschiede zwischen den an verschiedenen Stellen der Kanten gemessenen Abständen zeigen, dass das zweite Bauteil noch nicht parallel zum ersten Bauteil gehalten wird und führen vorzugsweise zu einer Korrektur durch die Handlingseinheit.

Schließlich ist es vorteilhaft, wenn die Lichtquelle eine UV-Lichtquelle und/oder ein Laser ist. Unter UV-Licht wird dabei Licht mit Wellenlängen im Bereich von 100 nm bis 380 nm verstanden. Die genaue Wellenlänge des benötigten UV-Lichts hängt vom verwendeten Klebstoff ab. Bei Verwendung eines Lasers zur Beaufschlagung des Klebstoffs mit Licht ist es möglich, besonders hohe Intensitäten des Lichts zu erreichen und damit verbunden eine besonders schnelle Aushärtung des Klebstoffs zu erreichen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1a - 1d: schematische Querschnitte durch eine Trägerplatte, ein erstes und ein zweites Bauteil bei verschiedenen Schritten der Herstellung einer Klebeverbindung,
- Fig. 2: eine schematische Explosionszeichnung einiger für die Herstellung einer Klebeverbindung verwendeter Teile und
- Fig. 3: eine schematische Seitenansicht einer Klebevorrichtung.

### Wege zur Ausführung der Erfindung

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

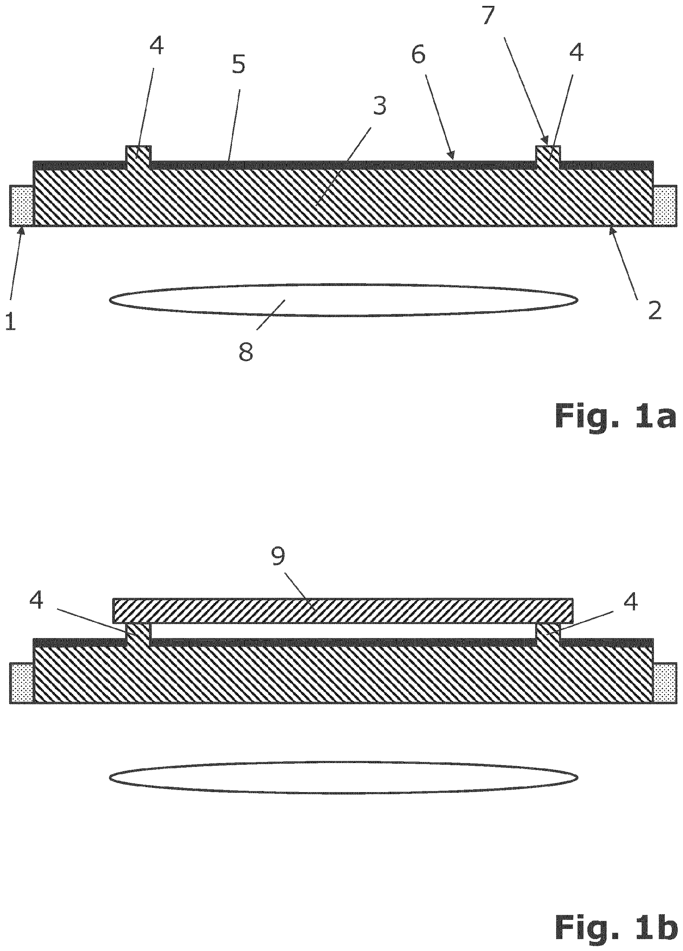

Figur 1a zeigt einen schematischen Querschnitt durch eine in einem Plattenhalterahmen 1 gehaltene Trägerplatte 2 zur Herstellung einer Klebeverbindung zwischen zumindest einem ersten und zweiten, zumindest teilweise transparenten plattenförmigen Bauteil. Über den Plattenhalterahmen 1 können beispielsweise die Position und Ausrichtung der Trägerplatte 2 justiert werden.

Die Trägerplatte 2 weist einen transparenten, also lichtdurchlässigen, Grundkörper 3 auf. Der Grundkörper 3 ist dabei plattenförmig ausgebildet, d.h. er ist ein Quader bei dem die Höhe viel kleiner ist als die Länge und die Breite.

Auf der Oberseite des Grundkörpers 3 der Trägerplatte 2 sind erhabene Strukturen 4 angeordnet, auf die das erste Bauteil aufgelegt wird. Die erhabenen Strukturen 4 werden dabei beispielsweise mit einem Ätzverfahren hergestellt. Dazu wird an den Stellen, an denen die erhabenen Strukturen 4 sein sollen, eine schützende Schicht, beispielsweise eine Chromschicht, aufgetragen. Dann wird so viel von den nicht geschützten Stellen weggeätzt bis die Höhe der erhabenen Strukturen 4 über dem Grundkörper 3 einen vorgegebenen Wert erreicht. Anschließend wird die schützende Schicht wieder entfernt.

Des Weiteren ist auf der Oberseite des Grundkörpers 3 der Trägerplatte 2 eine lichtundurchlässige Schicht 5 aufgebracht, und zwar an allen Stellen der Oberseite, die keine erhabenen Strukturen aufweisen. Die lichtundurchlässige Schicht 5 bestimmt also intransparente Abschnitte 6 der Trägerplatte 2, während die erhabenen Strukturen 4 mit transparenten Abschnitten 6 der Trägerplatte 2 zusammenfallen.

Anstelle von der lichtundurchlässigen Schicht 5 können die intransparenten Abschnitte 6 auch durch eine mit dem Grundkörper 3 verbundene Maske, insbesondere eine Metallmaske, gebildet sein. Die Maske wird dabei in einem separaten Herstellungsprozess hergestellt und anschließend mit dem Grundkörper 3 der Trägerplatte 2 form-, kraft- und/oder stoffschlüssig verbunden.

Unterhalb der Trägerplatte 2, also auf der den erhabenen Strukturen 4 abgewandten Seite der Trägerplatte 2, ist eine Lichtquelle 8 angeordnet. Alternativ hierzu kann die Lichtquelle 8 auch an einer anderen Stelle angeordnet sein und optische Elemente wie Spiegel oder Lichtwellenleiter vorgesehen sein, die das Licht von der Lichtquelle 8 zur Unterseite der Trägerplatte 2 lenken.

Da das Licht der Lichtquelle 8 zum Aushärten eines zwischen dem ersten und dem zweiten Bauteil aufgetragenen Klebstoffs dient, ist die Lichtquelle 8 als UV-Lichtquelle ausgeführt. Unter UV-Licht wird dabei Licht mit Wellenlängen im Bereich von 100 nm bis 380 nm verstanden. Das genaue Spektrum der Lichtquelle 8 richtet sich nach dem verwendeten Klebstoff, da je nach Klebstoff Licht unterschiedlicher Wellenlänge zum Aushärten des Klebstoffs benötigt wird.

Figur 1b zeigt einen Querschnitt durch die Trägerplatte 2, nachdem das erste zumindest teilweise transparente plattenförmige Bauteil 9 von einer Handlingseinheit auf die erhabenen Strukturen 4 der Trägerplatte 2 gelegt wurde. Bei dem ersten Bauteil 9 kann es sich dabei insbesondere um eine Glasplatte handeln. Dadurch, dass das erste Bauteil 9 lediglich auf den erhabenen Strukturen 4 der Trägerplatte 2 aufliegt, ist eine stabile, weitgehend wackelfreie Lage des ersten Bauteils 9 gegeben. Krafteinwirkungen auf das erste Bauteil 9 treten auch nur im Bereich der erhabenen Strukturen 4 auf, so dass das erste Bauteil 9 an allen anderen Stellen überwiegend frei von Spannungen ist.

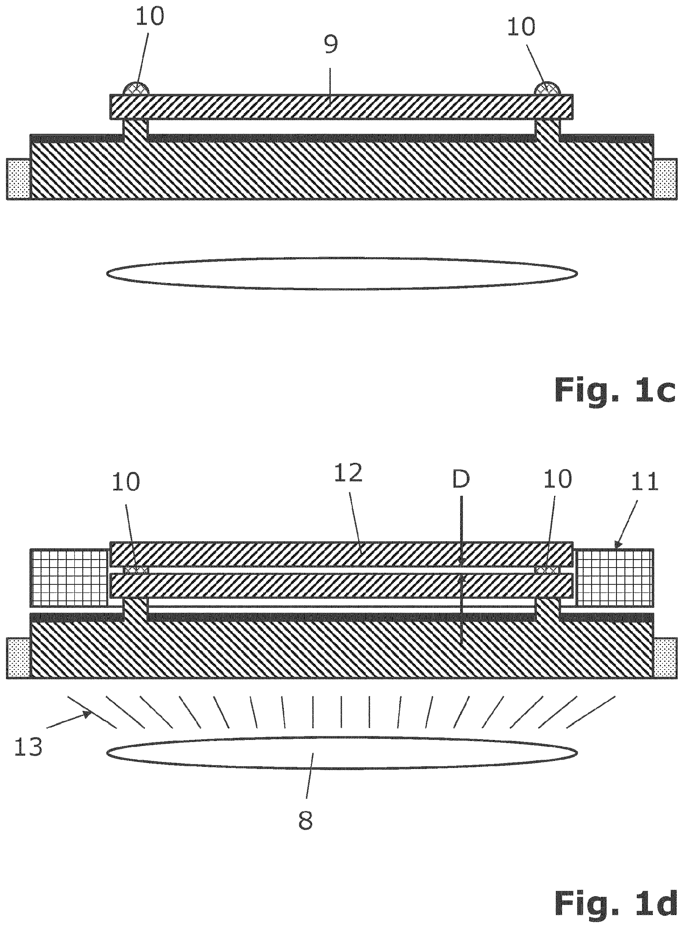

Im Bereich der transparenten Abschnitte 7 der Trägerplatte 2 wird mit einem Dosierventil Klebstoff 10 auf die der Trägerplatte 2 abgewandte Seite des ersten Bauteils 9 aufgetragen. Die Trägerplatte 2 mit dem ersten Bauteil 9 und dem aufgetragenen Klebstoff 10 ist in Figur 1c gezeigt.

Anschließend wird, wie in Figur 1d gezeigt, das in einem Bauteilhalterahmen 11 gehaltene zweite zumindest teilweise transparente plattenförmige Bauteil 12 von einer Handlingseinheit auf das erste Bauteil 9 gelegt und parallel zum ersten Bauteil 9 in einem vorbestimmten Abstand D gehalten. Dabei kommt das zweite Bauteil 12 auch in Kontakt mit dem Klebstoff 10.

Sodann wird die Lichtquelle 8 eingeschaltet und beaufschlagt den Klebstoff 10 mit Licht 13. Der Weg des Lichts 13 verläuft dabei von der Lichtquelle 8 durch die transparenten Abschnitte 7 der Trägerplatte 2 und durch das erste Bauteil 9 zum Klebstoff 10. Die Dauer der Beaufschlagung des Klebstoffs 10 mit Licht 13 ist von verschiedenen Faktoren abhängig, unter anderem von der Art des Klebstoffs 10, von der Intensität des Lichts 13, von der Dicke des Klebstoffs 10 und von der Temperatur.

Da das Licht 13 von den intransparenten Abschnitten 6 der Trägerplatte 2 blockiert wird, erfolgt an den Stellen des ersten Bauteils 9 und zweiten Bauteils 12, an denen kein Klebstoff 10 aufgetragen ist, keine Beaufschlagung mit Licht 13. Folglich erfolgt an den Stellen, an denen kein Klebstoff 10 aufgetragen ist, auch keine Erwärmung und keine Schädigung der Bauteile 9 und 12 durch das Licht 13. Damit werden auch Spannungen in den Bauteilen 9 und 12 auf ein nötiges Minimum reduziert, so dass das erste Bauteil 9 und das zweite Bauteil 12 einen hohen Grad an Parallelität zueinander aufweisen. Dies ist zum Beispiel dann von großer Bedeutung, wenn das erste und das zweite Bauteil 9 und 12 Glasplatten sind, die für die Anwendung in Holografie-Brillen parallel zueinander in einem vorbestimmten Abstand D miteinander verklebt werden.

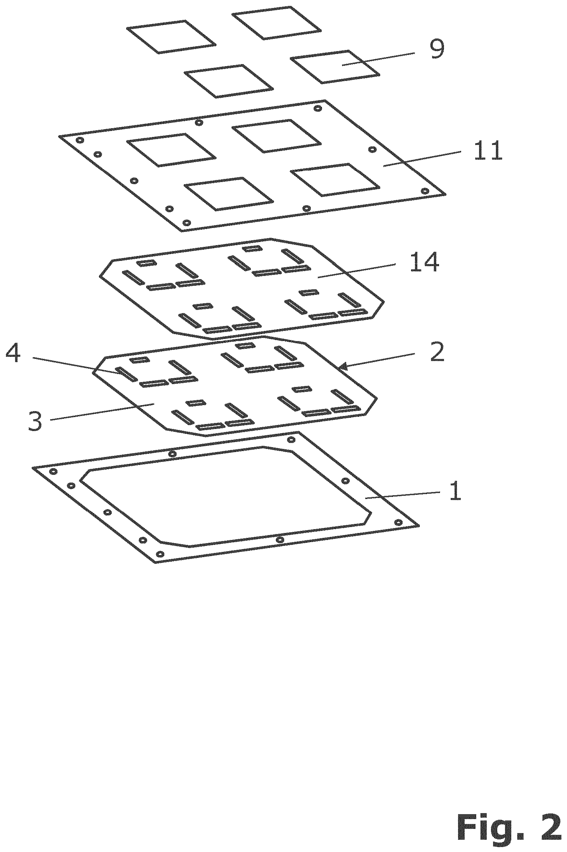

Figur 2 zeigt eine schematische Explosionszeichnung einiger für die Herstellung der Klebeverbindung verwendeter Teile. Von unten nach oben ist dies zunächst der Plattenhalterahmen 1, in dem die Trägerplatte 2 gehalten wird und mittels dessen die Trägerplatte 2 justiert werden kann.

Die Trägerplatte 2 weist erhabene Strukturen 4 auf, wobei erhabene Strukturen 4 zum Halten von vier ersten Bauteilen 9 vorgesehen sind, so dass vier Klebeverbindungen gleichzeitig hergestellt werden können. Die erhabenen Strukturen 4 sind dabei so angeordnet, dass sie jeweils in einem Randbereich des ersten Bauteils 9 mit dem ersten Bauteil 9 in Kontakt kommen.

Auf den Grundkörper 3 der Trägerplatte 2 wird eine Maske 14, insbesondere eine Metallmaske, gelegt und mit der Grundkörper 3 verbunden. Die Maske 14 ist lichtundurchlässig und weist Aussparungen auf, die mit den erhabenen Strukturen 4 der Trägerplatte 2 zusammenfallen. Durch diese Aussparungen kann der Klebstoff 11 mit Licht 13 von unten durch die Trägerplatte 2 und das erste Bauteil 9 beaufschlagt werden.

Der Bauteilhalterahmen 11, in dem zunächst das erste Bauteil 9 und anschließend das zweite Bauteil 12 aufgenommen wird, weist Aussparungen zum Halten von vier ersten bzw. zweiten Bauteilen 9 bzw. 12 auf, so dass eine den Bauteilhalterahmen 11 bewegende Handlingseinheit vier Bauteile 9 oder 12 gleichzeitig positionieren kann.

Schließlich sind in Figur 2 noch vier erste plattenförmige Bauteile 9 gezeigt, für die gleichzeitig eine Klebeverbindung hergestellt werden kann. Die vier zweiten plattenförmigen Bauteile 12 sind vorzugsweise identisch oder ähnlich zu den ersten Bauteilen 9.

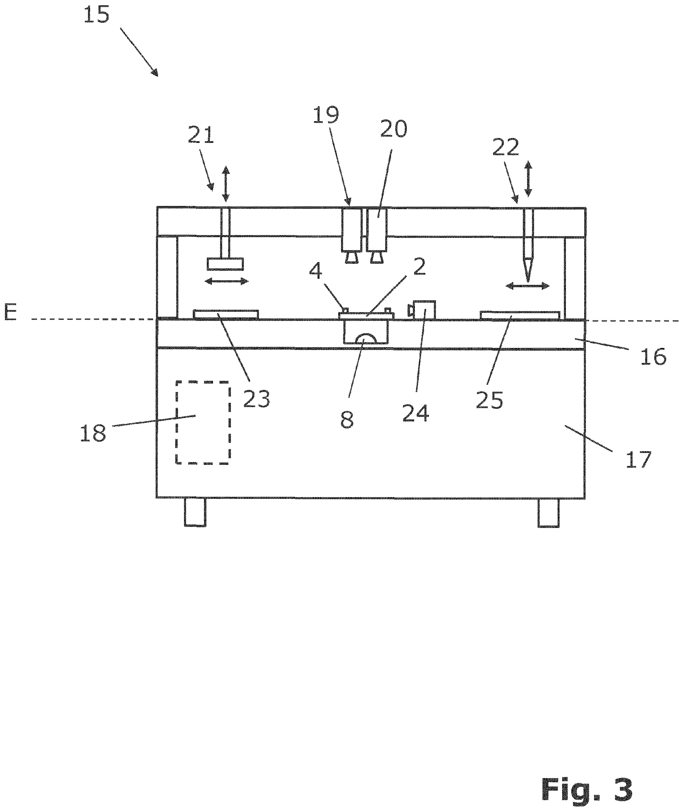

Figur 3 zeigt eine schematische Seitenansicht einer Klebevorrichtung 15. Die Klebevorrichtung 15 weist eine Arbeitsplatte 16 und eine die Arbeitsplatte 16 tragendes Untergestell 17 auf. Die Oberseite der Arbeitsplatte 16 definiert dabei eine Arbeitsebene E.

Mittig auf der Arbeitsplatte 16 befindet sich eine Trägerplatte 2 mit erhabenen Strukturen 4 und unter der Trägerplatte 2 ist in einer Aussparung der Arbeitsplatte 16 eine Lichtquelle 8 angeordnet. Lediglich angedeutet ist eine Steuereinheit 18 der Klebevorrichtung 15, die die Einheiten der Klebevorrichtung 15 steuert.

Über der Trägerplatte 2 ist eine Kameraeinrichtung 19 angeordnet, hier beispielsweise mit zwei Kameras 20. Über der Arbeitsplatte 16 in der Arbeitsebene E und senkrecht zur Arbeitsebene E verfahrbar sind zudem eine Handlingseinheit 21 und ein Dosierventil 22 für Klebstoff 10.

Zur Herstellung einer Klebeverbindung zwischen zwei zumindest teilweise transparenten plattenförmigen Bauteilen 9 und 12 wird zunächst das im Bauteilhalterahmen 11 gehaltene erste Bauteil 9 mittels der Handlingseinheit 21 von einer Aufnahmestation 23 aufgenommen, zur Trägerplatte 2 bewegt und dort abgelegt. Die genaue Position des ersten Bauteils 9 wird von den Kameras 20 der Kameraeinrichtung 19 erfasst und mit einer Bildverarbeitungssoftware in der Steuereinheit 18 ausgewertet.

Mittels des Dosierventils 22 wird anschließend Klebstoff 10 an vorgegebenen Stellen auf das erste Bauteil 9 aufgetragen. Sodann wird das ebenfalls im Bauteilhalterahmen 11 gehaltene zweite Bauteil 12 mittels der Handlingseinheit 21 von der Aufnahmestation 23 aufgenommen und zur Trägerplatte 2 bewegt. Bevor das zweite Bauteil 12 auf dem ersten Bauteil 9 abgelegt wird, wird es von den Kameras 20 der Kameraeinrichtung 19 erfasst und mit der Bildverarbeitungssoftware in der Steuereinheit 18 ausgewertet. Die gemessene Position des zweiten Bauteils 12 wird mit der gemessenen Position des ersten Bauteils 9 verglichen und - falls nötig - wird die Position des zweiten Bauteils 12 von der Handlingseinheit 21 korrigiert.

Das zweite Bauteil 12 wird dann auf dem ersten Bauteil 9 abgelegt und parallel zu dem ersten Bauteil 9 in einem Abstand D vom ersten Bauteil 9 gehalten. Dieser Abstand D wird von einem nahe an der Trägerplatte 2 angeordneten und auf die Kanten der Bauteile 9 und 12 gerichteten Sensor 24, der hier als optischer Sensor dargestellt ist, gemessen. Die Handlingseinheit 21 bewegt dann das zweite Bauteil 12 derart, dass der Abstand D zwischen dem ersten und zweiten Bauteil 9 und 12 einem vorbestimmten Abstand D entspricht.

Sobald das zweite Bauteil 12 richtig ausgerichtet ist, wird die Lichtquelle 8 eingeschaltet und der Klebstoff 10 zum Aushärten von der Unterseite der Trägerplatte 2 durch die Trägerplatte 2 und durch das erste Bauteil 9 mit Licht 13 beaufschlagt.

Nach einer vorbestimmten Dauer wird die Lichtquelle 8 wieder ausgeschaltet und die miteinander verklebten Bauteile 9 und 12 mittels der Handlingseinheit 21 zu einer Abgabestation 25 transportiert. Daraufhin können die nächsten Bauteile 9 und 12 miteinander verklebt werden.

### Bezugszeichenliste

- 1: Plattenhalterahmen
- 2: Trägerplatte
- 3: Grundkörper
- 4: erhabene Strukturen
- 5: lichtundurchlässige Schicht
- 6: intransparenter Abschnitt
- 7: transparenter Abschnitt
- 8: Lichtquelle
- 9: erstes Bauteil
- 10: Klebstoff
- 11: Bauteilhalterahmen
- 12: zweites Bauteil
- 13: Licht
- 14: Maske
- 15: Klebevorrichtung
- 16: Arbeitsplatte
- 17: Untergestell
- 18: Steuereinheit
- 19: Kameraeinrichtung
- 20: Kamera
- 21: Handlingseinheit
- 22: Dosierventil
- 23: Aufnahmestation
- 24: Sensor
- 25: Abgabestation

- D: Abstand
- E: Arbeitsebene

## Patentansprüche

1. Verfahren zur Herstellung einer Klebeverbindung zwischen zumindest einem ersten und zweiten, zumindest teilweise transparenten plattenförmigen Bauteil (9; 12), bei dem das erste Bauteil (9) auf eine Trägerplatte (2) gelegt wird, bei dem auf der der Trägerplatte (2) abgewandten Seite des ersten Bauteils (9) an vorgegebenen Stellen Klebstoff (10) auf das erste Bauteil (9) aufgetragen wird, bei dem das zweite Bauteil (12) auf das erste Bauteil (9) gelegt wird und parallel zum ersten Bauteil (9) in einem vorbestimmten Abstand (D) gehalten wird, und zwar derart, dass das zweite Bauteil (12) in Kontakt mit dem auf dem ersten Bauteil (9) befindlichen Klebstoff (10) gelangt, wobei zum Aushärten des Klebstoffs (10) dieser von der den Bauteilen (9; 12) abgewandten Seite der Trägerplatte (2) durch die zumindest teilweise transparente Trägerplatte (2) und durch das erste Bauteil (9) mit Licht (13) beaufschlagt wird, **dadurch gekennzeichnet, dass** das erste Bauteil (9) auf erhabene Strukturen (4) der Trägerplatte (2) gelegt wird.

2. Verfahren nach Anspruch 1, **dadurch gekennzeichnet, dass** die Trägerplatte (2) in einem Plattenhalterahmen (1) gehalten wird.

3. Verfahren nach Anspruch 1 oder 2, **dadurch gekennzeichnet, dass** der Klebstoff (10) mittels eines Dosierventils (22) auf das erste Bauteil (9) aufgebracht wird.

4. Verfahren nach einem der Ansprüche 1 bis 3, **dadurch gekennzeichnet, dass** sich die vorgegebenen Stellen, an denen der Klebstoff (10) auf das erste Bauteil (9) aufgetragen wird, in einem Randbereich des ersten Bauteils (9) befinden und/oder dass der Klebstoff (10) im Bereich der erhabenen Strukturen (4) der Trägerplatte (2) auf das erste Bauteil (9) aufgetragen wird und/oder dass zumindest das zweite Bauteil (12) von einer Handlingseinheit (21) in einem Bauteilhalterahmen (11) gehalten wird.

5. Verfahren nach einem der Ansprüche 1 bis 4, **dadurch gekennzeichnet, dass** nach dem Auflegen des ersten Bauteils (9) auf die Trägerplatte (2) die Position des ersten Bauteils (9) mittels einer Kameraeinrichtung (19) vermessen wird, vor dem in Kontakt mit dem Klebstoff (10) Bringen des zweiten Bauteils (12) die Position des zweiten Bauteils (12) mittels der Kameraeinrichtung (19) vermessen wird und das zweite Bauteil (12) auf Grund der vermessenen Positionen in Bezug auf das erste Bauteil (9) justiert wird.

6. Verfahren nach Anspruch 4 oder 5, **dadurch gekennzeichnet, dass** die den Bauteilhalterahmen (11) haltende Handlingseinheit (21) parallel zur Trägerplatte (2) ausgerichtet wird, wobei die Ausrichtung manuell optisch und/oder mittels Sensoren erfolgt.

7. Verfahren nach einem der Ansprüche 1 bis 6, **dadurch gekennzeichnet, dass** das Halten des zweiten Bauteils (12) in einem vorbestimmten Abstand (D) zum ersten Bauteil (9) mittels auf dem ersten Bauteil (9) angebrachten und/oder auf das erste Bauteil (9) gelegten Abstandshaltern erfolgt und/oder dass das Halten des zweiten Bauteils (12) in einem vorbestimmten Abstand (D) zum ersten Bauteil (9) mittels Sensoren (24), insbesondere optischen Sensoren, erfolgt.

8. Verfahren nach einem der Ansprüche 1 bis 7, **dadurch gekennzeichnet, dass** das den Klebstoff (10) beaufschlagende Licht (13) von einer UV-Lichtquelle und/oder einem Laser bereitgestellt wird und/oder dass das Licht (13) derart von intransparenten Abschnitten (6) der Trägerplatte (2) blockiert wird, dass nur die Bereiche des ersten und zweiten Bauteils (9; 12) mit Licht (13) beaufschlagt werden, an denen der Klebstoff (10) aufgetragen ist.

9. Verfahren nach einem der Ansprüche 1 bis 8, **dadurch gekennzeichnet, dass** analog zum Herstellen der Klebeverbindung zwischen dem ersten Bauteil (9) und dem zweiten Bauteil (12) eine Klebeverbindung zwischen dem zweiten Bauteil (12) und einem weiteren Bauteil hergestellt wird und dieser Verfahrensschritt gegebenenfalls für nochmals weitere Bauteile wiederholt wird.

10. Trägerplatte für die Herstellung einer Klebeverbindung zwischen zumindest einem ersten und zweiten, zumindest teilweise transparenten plattenförmigen Bauteil (9; 12) nach dem Verfahren nach einem der Ansprüche 1 bis 9, aufweisend einen Grundkörper (3) mit erhabenen Strukturen (4), auf die das erste Bauteil (9) auflegbar ist, wobei die Trägerplatte (2) zumindest einen transparenten Abschnitt (7) und zumindest einen intransparenten Abschnitt (6) aufweist, **dadurch gekennzeichnet, dass** die transparenten Abschnitte (7) im Bereich der erhabenen Strukturen (4) angeordnet sind.

11. Trägerplatte nach Anspruch 10, **dadurch gekennzeichnet, dass** die erhabenen Strukturen (4) durch Ätzen der Stellen, die nicht erhaben sind, hergestellt sind.

12. Trägerplatte nach Anspruch 10 oder 11, **dadurch gekennzeichnet, dass** die intransparenten Abschnitte (6) durch eine auf dem Grundkörper (3) aufgebrachte lichtundurchlässige Schicht (5), insbesondere eine Chromschicht, gebildet sind und/oder dass die intransparenten Abschnitte (6) durch eine mit dem Grundkörper (3) verbundene Maske (14), insbesondere eine Metallmaske, gebildet sind und/oder dass sich die Transparenz und Intransparenz auf UV-Licht bezieht.

13. Klebevorrichtung zur Herstellung einer Klebeverbindung zwischen zumindest einem ersten und zweiten, zumindest teilweise transparenten plattenförmigen Bauteil (9; 12) nach dem Verfahren nach einem der Ansprüche 1 bis 9, aufweisend eine sich entlang einer Arbeitsebene erstreckende Arbeitsplatte (16) und ein diese Arbeitsplatte (16) tragendes Untergestell (17), eine auf der Arbeitsplatte (16) angeordnete oder anordenbare Trägerplatte (2) nach einem der Ansprüche 15 bis 20, auf die das erste Bauteil (9) auflegbar ist, eine Handlingseinheit (21) zum Aufnehmen, Verfahren, Halten und Ablegen der Bauteile (9; 12), einem verfahrbaren Dosierventil (22) zum Auftragen von Klebstoff (10) auf das erste Bauteil (9) und einer Lichtquelle (8) zum Beaufschlagen des auf dem ersten Bauteil (9) aufgetragenen Klebstoffs (10) mit Licht (13) von der den Bauteilen (9; 12) abgewandten Seite der Trägerplatte (2) durch die Trägerplatte (2) und durch das erste Bauteil (9).

14. Klebevorrichtung nach Anspruch 13, **dadurch gekennzeichnet, dass** die Klebevorrichtung (15) eine Kameraeinrichtung (19) zum Vermessen der Positionen der Bauteile (9; 12) aufweist und/oder dass die Klebevorrichtung (15) Sensoren (24) zum Messen des Abstands (D) zwischen dem ersten Bauteil (9) und dem zweiten Bauteil (12) aufweist.

15. Klebevorrichtung nach Anspruch 13 bis 14, **dadurch gekennzeichnet, dass** die Lichtquelle (8) eine UV-Lichtquelle und/oder ein Laser ist.

## Claims

1. Method for producing an adhesive bond between at least one first and second, at least partially transparent, plate-like component (9; 12), in which the first component (9) is placed onto a supporting plate (2), in which adhesive (10) is applied to the first component (9) at specified locations on the side of the first component (9) which faces away from the supporting plate (2), in which the second component (12) is placed onto the first component (9) and is held parallel to the first component (9) at a predetermined distance (D), namely in such a manner that the second component (12) comes into contact with the adhesive (10) located on the first component (9), wherein to cure the adhesive (10), this adhesive is exposed to light (13) from the side of the supporting plate (2) facing away from the components (9; 12) through the at least partially transparent supporting plate (2) and through the first component (9), **characterized in that** the first component (9) is placed onto raised structures (4) of the supporting plate (2).

2. Method according to claim 1, **characterized in that** the supporting plate (2) is held in a plate-holding frame (1).

3. Method according to claim 1 or 2, **characterized in that** the adhesive (10) is applied to the first component (9) by means of a metering valve (22).

4. Method according to one of claims 1 to 3, **characterized in that** the specified locations at which the adhesive (10) is applied to the first component (9) are located in an edge region of the first component (9) and/or **in that** the adhesive (10) is applied to the first component (9) in the region of the raised structures (4) of the supporting plate (2) and/or **in that** at least the second component (12) is held by a handling unit (21) in a component-holding frame (11).

5. Method according to one of claims 1 to 4, **characterized in that** after the placement of the first component (9) onto the supporting plate (2), the position of the first component (9) is measured by means of a camera device (19), before the second component (12) is brought into contact with the adhesive (10), the position of the second component (12) is measured by means of the camera device (19) and the second component (12) is adjusted in relation to the first component (9) on the basis of the measured positions.

6. Method according to claim 4 or 5, **characterized in that** the handling unit (21) holding the component-holding frame (11) is aligned parallel to the supporting plate (2), wherein the alignment is carried out manually optically and/or by means of sensors.

7. Method according to one of claims 1 to 6, **characterized in that** the holding of the second component (12) at a predetermined distance (D) from the first component (9) is carried out by means of spacers that are attached on the first component (9) and/or placed onto the first component (9) and/or **in that** the holding of the second component (12) a predetermined distance (D) from the first component (9) is carried out by means of sensors (24), particularly optical sensors.

8. Method according to one of claims 1 to 7, **characterized in that** the light (13) to which the adhesive (10) is exposed is provided by a UV light source and/or a laser and/or **in that** the light (13) is blocked by non-transparent sections (6) of the supporting plate (2) in such a manner that only the regions of the first and second component (9; 12) at which the adhesive (10) is applied are exposed to light (13).

9. Method according to one of claims 1 to 8, **characterized in that**, analogously to the production of the adhesive bond between the first component (9) and the second component (12), an adhesive bond is produced between the second component (12) and a further component and this method step is possibly repeated for yet further components.

10. Supporting plate for producing an adhesive bond between at least one first and second, at least partially transparent plate-like component (9; 12) according to the method of one of claims 1 to 9, comprising a base body (3) having raised structures (4), onto which the first component (9) can be placed, wherein the supporting plate (2) comprises at least one transparent section (7) and at least one non-transparent section (6), **characterized in that** the transparent sections (7) are arranged in the region of the raised structures (4).

11. Supporting plate according to claim 10, **characterized in that** the raised structures (4) are produced by etching the locations that are not raised.

12. Supporting plate according to claim 10 or 11, **characterized in that** the non-transparent sections (6) are formed by an opaque layer (5) that is applied on the base body (3), particularly a chrome layer, and/or **in that** the non-transparent sections (6) are formed by a mask (14), particularly a metal mask, that is attached to the base body (3) and/or in that the transparency and non-transparency relates to UV light.

13. Bonding device for producing an adhesive bond between at least one first and second, at least partially transparent, plate-like component (9; 12) according to the method of one of claims 1 to 9, comprising a worktop (16) that extends along a working plane and a base frame (17) supporting this worktop (16), a supporting plate (2) according to one of claims 15 to 20, which is arranged or can be arranged on the worktop (16) and onto which the first component (9) can be placed, a handling unit (21) for accommodating, moving, holding and placing the components (9; 12), a movable metering valve (22) for applying adhesive (10) to the first component (9) and a light source (8) for exposing the adhesive (10) applied on the first component (9) to light (13) from the side of the supporting plate (2) facing away from the components (9; 12) through the supporting plate (2) and through the first component (9).

14. Bonding device according to claim 13, **characterized in that** the bonding device (15) comprises a camera device (19) for measuring the positions of the components (9; 12) and/or **in that** the bonding device (15) comprises sensors (24) for measuring the distance (D) between the first component (9) and the second component (12).

15. Bonding device according to claim 13 to 14, **characterized in that** the light source (8) is a UV light source and/or a laser.

## Revendications

1. Procédé de fabrication d'une liaison adhésive entre au moins un premier et un deuxième composant (9 ; 12) en forme de plaques au moins partiellement transparents, dans lequel le premier composant (9) est posé sur une plaque de support (2), dans lequel une colle (10) est appliquée sur le premier composant (9) à des endroits prédéfinis sur le côté du premier composant (9) opposé à la plaque de support (2), dans lequel le deuxième composant (12) est posé sur le premier composant (9) et maintenu parallèlement au premier composant (9) à une distance prédéterminée (D), et notamment de manière à ce que le deuxième composant (12) vienne en contact avec la colle (10) située sur le premier composant (9), dans lequel, pour le durcissement de la colle (10), celle-ci est exposé à de la lumière (13) à travers la plaque de support (2) au moins partiellement transparente et à travers le premier composant (9) depuis le côté de la plaque de support (2) opposé aux composants (9 ; 12), **caractérisé en ce que** le premier composant (9) est posé sur des structures en relief (4) de la plaque de support (2).

2. Procédé selon la revendication 1, **caractérisé en ce que** la plaque de support (2) est maintenue dans un cadre de maintien de plaque (1).

3. Procédé selon la revendication 1 ou 2, **caractérisé en ce que** la colle (10) est appliquée sur le premier composant (9) au moyen d'une soupape de dosage (22).

4. Procédé selon l'une des revendications 1 à 3, **caractérisé en ce que** les endroits prédéfinis auxquels la colle (10) est appliquée sur le premier composant (9) se trouvent dans une région de bord du premier composant (9) et/ou **en ce que** la colle (10) est appliquée sur le premier composant (9) dans la région des structures en relief (4) de la plaque de support (2) et/ou **en ce qu'**au moins le deuxième composant (12) est maintenu par une unité de manipulation (21) dans un cadre de maintien de composant (11).

5. Procédé selon l'une des revendications 1 à 4, **caractérisé en ce qu'**après la pose du premier composant (9) sur la plaque de support (2), la position du premier composant (9) est mesurée au moyen d'un dispositif de caméra (19), avant la mise en contact du deuxième composant (12) avec la colle (10), la position du deuxième composant (12) est mesurée au moyen du dispositif de caméra (19) et le deuxième composant (12) est ajusté par rapport au premier composant (9) sur la base des positions mesurées.

6. Procédé selon la revendication 4 ou 5, **caractérisé en ce que** l'unité de manipulation (21) maintenant le cadre de maintien de composant (11) est orientée parallèlement à la plaque de support (2), dans lequel l'orientation est effectuée manuellement de façon optique et/ou au moyen de capteurs.

7. Procédé selon l'une des revendications 1 à 6, **caractérisé en ce que** le maintien du deuxième composant (12) à un distance prédéterminée (D) du premier composant (9) est effectué au moyen d'espaceurs fixés au premier composant (9) et/ou posés sur le premier composant (9) et/ou **en ce que** le maintien du deuxième composant (12) à une distance prédéterminée (D) du premier composant (9) est effectué au moyen de capteurs (24), en particulier de capteurs optiques.

8. Procédé selon l'une des revendications 1 à 7, **caractérisé en ce que** la lumière (13) appliquée à la colle (10) est fournie par une source de lumière UV et/ou par un laser et/ou **en ce que** la lumière (13) est bloquée par des sections non transparentes (6) de la plaque de support (2), de telle façon que seules les régions du premier et du deuxième composant (9 ; 12) où la colle (10) est appliquée sont soumises à de la lumière (13).

9. Procédé selon l'une des revendications 1 à 8, **caractérisé en ce que** de façon analogique à la fabrication de la liaison adhésive entre le premier composant (9) et le deuxième composant (12), une liaison adhésive est fabriquée entre le deuxième composant (12) et un autre composant et cette étape de procédé est répétée le cas échéant pour encore d'autres composants.

10. Plaque de support destinée à la fabrication d'une liaison adhésive entre au moins un premier et un deuxième composant (9 ; 12) en forme de plaques au moins partiellement transparents conformément au procédé selon l'une des revendications 1 à 9, présentant un corps de base (3) avec des structures en relief (4) sur lesquelles le premier composant (9) peut être posé, dans laquelle la plaque de support (2) présente au moins une section transparente (7) et au moins une section non transparente (6), **caractérisée en ce que** les sections transparentes (7) sont disposées dans la région des structures en relief (4).

11. Plaque de support selon la revendication 10, **caractérisée en ce que** les structures en relief (4) sont réalisées par attaque chimique des endroits non en relief.

12. Plaque de support selon la revendication 10 ou 11, **caractérisée en ce que** les sections non transparentes (6) sont formées par une couche opaque (5) appliquée sur le corps de base (3), en particulier une couche de chrome, et/ou **en ce que** les sections non transparentes (6) sont formées par un masque (14) relié au corps de base (3), en particulier un masque métallique, et/ou **en ce que** la transparence et l'opacité se rapportent à la lumière UV.

13. Dispositif de collage destiné à fabriquer une liaison adhésive entre au moins un premier et un deuxième composant (9 ; 12) en forme de plaques au moins partiellement transparents conformément au procédé selon l'une des revendications 1 à 9, présentant une plaque de travail (16) s'étendant le long d'un plan de travail et un châssis (17) portant ladite plaque de travail (16), une plaque de support (2) selon l'une des revendications 15 à 20, disposée ou apte à être disposée sur la plaque de travail (16), sur laquelle le premier composant (9) peut être posé, une unité de manipulation (21) permettant de recevoir, déplacer, maintenir et déposer les composants (9 ; 12), une soupape de dosage déplaçable (22) pour l'application d'une colle (10) sur le premier composant (9) et une source de lumière (8) permettant d'exposer la colle (10) appliquée sur le premier composant (9) à de la lumière (13) à travers la plaque de support (2) et à travers le premier composant (9) depuis le côté de la plaque de support (2) opposé aux composants (9 ; 12).

14. Dispositif de collage selon la revendication 13, **caractérisé en ce que** le dispositif de collage (15) présente un dispositif de caméra (19) destiné à mesurer les positions des composants (9 ; 12) et/ou **en ce que** le dispositif de collage (15) présente des capteurs (24) destinés à mesurer la distance (D) entre le premier composant (9) et le deuxième composant (12).

15. Dispositif de collage selon les revendications 13 à 14, **caractérisé en ce que** la source de lumière (8) est une source de lumière UV et/ou un laser.
